**Europäisches Patentamt**

**European Patent Office**

**Office européen des brevets**

(19)

(11) Veröffentlichungsnummer: **0 103 702**

**A2**

(12) # EUROPÄISCHE PATENTANMELDUNG

(21) Anmeldenummer: **83107250.9**

(22) Anmeldetag: **23.07.83**

(51) Int. Cl.³: **B 07 B 7/06**

(30) Priorität: **26.08.82 DE 3231722**

(43) Veröffentlichungstag der Anmeldung:
**28.03.84 Patentblatt 84/13**

(84) Benannte Vertragsstaaten:
**BE FR GB LU NL**

(71) Anmelder: **Fried. Krupp Gesellschaft mit beschränkter Haftung**
**Altendorfer Strasse 103**
**D-4300 Essen 1(DE)**

(72) Erfinder: **Pant, Otmar**
**Spiekermannstrasse 21**
**D-4300 Essen(DE)**

(72) Erfinder: **Radke, Dietrich, Dr.**
**An der Hoffnung 16**
**D-4030 Ratingen 5(DE)**

(54) **Verfahren und Vorrichtung zum Absieben pneumatisch geförderter Feststoffteile.**

(57) Bei einem Verfahren zum Absieben von in einer Leitung pneumatisch geförderten Feststoffteilen mittels eines in die Leitung (3, 4) eingeschalteten Siebes wird eine Erhöhung und Vergleichmäßigung der Siebleistung dadurch bewirkt, daß eine das Sieb (10) von unten an- und durchströmende Wirbelschicht aus Fördergas und Feststoff in einem sich im wesentlichen unter dem Sieb (10) erstreckenden als geschlossener Wirbeltrichter (1) ausgebildeten Gefäß gebildet wird. Bei Anhäufung nicht durchsiebbarer Feststoffteile im Trichtermund werden diese durch Druckabfall gesteuert in einer Abzweigleitung (15) abgezogen.

EP 0 103 702 A2

- 1 -

FRIED. KRUPP GESELLSCHAFT MIT BESCHRÄNKTER HAFTUNG
in Essen

Verfahren und Vorrichtung zum Absieben pneumatisch
geförderter Feststoffteile

Die Erfindung bezieht sich auf ein Verfahren zum Absieben von in einer Leitung pneumatisch geförderten
Feststoffteilen, insbesondere solcher aus Feinkohle,
mittels eines in die Leitung eingeschalteten Siebes,
das zumindest annähernd waagerecht in einem sich im
wesentlichen unter dem Sieb erstreckenden Gefäß angeordnet ist und von unten beaufschlagt wird, und auf
eine Vorrichtung zur Durchführung des Verfahrens.

Ein solches auch Kontrollsiebung genanntes Absieben
ist im allgemeinen erforderlich, weil gröbere Teile
des Feststoffs oder von Verunreinigungen häufig zu
Verstopfungen des Fördersystems führen würden. Zu
diesem Zweck ist es daher bekannt, waagerecht angeordnete Siebe, die auch als Schwingsiebe arbeiten
können, mit dem Fördergutstrom von oben und somit
unterstützt durch die Schwerkraft zu beaufschlagen. Bei
derartigen Siebeinrichtungen sind die Siebflächen jedoch verhältnismäßig schnell verstopft. Auch durch eine
Vergrößerung der betreffenden Siebflächen ist eine Abhilfe kaum zu erzielen, weil eine sehr geringe genau
eingestellte Strömungsgeschwindigkeit des Fördergases
erforderlich wird und die Siebfläche gleichzeitig erheblich vergrößert werden muß. Trotzdem bleibt der
Siebrückstand infolge seines Widerstandes noch auf dem
Sieb liegen und wird auch durch die Rüttelbewegung
eines Schwingsiebes kaum beseitigt.

Bekannt ist ferner der Einsatz des sogenannten Windsichtens, bei dem die gröberen Teile durch die
Schwerkraft nach unten in den Austrag fallen und nur
die leichteren Teile weitertransportiert werden.

Abgesehen davon, daß die Trennwirkung dieses Verfahrens unzureichend ist, werden große aber leichte Verunreinigungen, wie z.B. Putzlappen oder Papier, nicht
ausgeschieden. Diese verstopfen dann zur Sicherung
etwa nachgeschaltete Siebe oder auch das Leitungssystem.

Aus der DE-OS 24 03 091 ist eine Vorrichtung bekannt
geworden, die zwar nach dem eingangs genannten Verfahren arbeitet, aber in erster Linie für das Sieben von
Metall bestimmt und geeignet ist. Das bei dieser Vorrichtung in einer Durchströmkammer waagerecht angeordnete, von unten nach oben durchströmte Sieb setzt sich
ebenso wie die bekannten anderen Siebe mit der Zeit zu
und muß dann gereinigt werden, was durch einen infolge
einer schlagartigen Unterbrechung des Förderstroms erzeugten Rückstau bewirkt werden soll. Ein kontinuierliches Durchsieben ist mit dieser Vorrichtung somit
nicht zu erzielen.

Der Erfindung liegt die Aufgabe zugrunde, ein Verfahren
der eingangs genannten Art so auszugestalten, daß ohne
wesentliche Unterbrechungen des Fördergutstromes die
Durchsiebleistung erheblich vergrößert wird. Die Aufgabe wird gelöst durch die im kennzeichnenden Teil des
Anspruchs 1 wiedergegebenen Merkmale.

Untersuchungen haben gezeigt, daß die nach dem neuen Verfahren durchzusetzenden Feststoffmengen je nach dem zu behandelnden Stoff bis etwa zehnmal so groß sein können wie bei Einsatz eines gleich großen Siebes, das auf die bekannte eingangs geschilderte Art der Kontrollsiebung arbeitet.

Besonders gute Ergebnisse werden erzielt, wenn nach einer vorteilhaften Ausgestaltung der Erfindung das Durchsieben unter Rüttelbewegungen des Siebes erfolgt. Um einen ununterbrochenen Fördergutstrom zu gewährleisten, ist nach einer weiteren Ausgestaltung der Erfindung vorgesehen, daß wenigstens zwei parallele Wirbelschichten in diesen zugeordneten Gefäßen gleichzeitig gebildet werden können, von denen eine bzw. mehrere jeweils nur zur Ablösung einer anderen gebildet wird. Weitere vorteilhafte Ausgestaltungen des neuen Verfahrens sind in den Ansprüchen 2 bis 6 wiedergegeben.

- 4 -

Die im Anspruch 9 wiedergegebene Vorrichtung zur Durchführung des Verfahrens nach der Erfindung zeichnet sich durch einen einfachen Aufbau aus und kann weitgehend durch im Fachhandel erhältliche Teile leicht zusammengesetzt werden. Weitere vorteilhafte Ausgestaltungen dieser Vorrichtung sind Gegenstand der Ansprüche 10 bis 17.

Das Verfahren nach der Erfindung wird nachfolgend anhand eines Ausführungsbeispiels einer neuen Vorrichtung, die in teilweise ausgeschnittener Ansicht schematisch in der Zeichung dargestellt ist, näher erläutert.

Ein aus einem unteren Wirbeltrichter 1 und einem nach oben ausgewölbten Deckelteil 2 bestehender Behälter wird zwischen einer unten angeschlossenen Zulauf-Leitung 3 und einer von dem Deckelteil 2 seitlich abzweigenden Ablauf-Leitung 4 so angeordnet, daß seine Rotationsachse 5 senkrecht steht. Der Wirbeltrichter 1 ist an seinem oberen Ende mit einem Flansch 6 versehen, der mit einem Gegenflansch 7 des Deckelteils 2 verschraubt ist. Zwischen beiden Flanschen ist ein aus einem flexiblem Stoff, z.B. Gummi, bestehender ringförmiger Kompensator angeordnet und mitverschraubt, dessen Dehnungswelle 9 in das Gefäß hineinragt, und dessen innerer Rand mit einem kreisscheibenförmigen Sieb 10 verbunden ist. In dem Verbindungsbereich sind drei auf den Umfang verteilte, das Sieb 10 haltende und am Deckel 2 befestigte Federn 11 angeordnet.

0103702

- 5 -

In dem Verbindungsbereich greifen ferner mehrere auf den Umfang gleichmäßig verteilte stabförmige Streben 12 an, die mit dem schwingenden Teil eines oberhalb des Siebes 10 liegenden Schwingungsgenerators 13 verbunden sind. Der elektrisch betätigte Schwingungsgenerator 13 ist mit den erforderlichen Anschlüssen versehen dicht unter dem nach oben ausgewölbten Deckelteil 2 zentral angeordnet. Der Wirbeltrichter 1 weist an seinem unten liegenden Trichtermund eine Leitungverzweigung 14 auf, in deren beiden Abzweigleitungen, nämlich der Zulauf-Leitung 3 und einer Ablauf-Leitung 15, jeweils ein Absperrventil 16 und 17 angeordnet ist. An die Ablauf-Leitung 15 ist ein mit einem Sieb 18 versehener Behälter 19 angeschlossen; dieser steht über eine durch den Pfeil 20 angedeutete Leitung mit der Zulauf-Leitung 3 in Verbindung.

Das Verfahren nach dem Ausführungsbeispiel läuft mit der beschriebenen Vorrichtung in folgender Weise ab:

Über die Leitung 3 wird in Stickstoff suspensierte Feinkohle, deren Massenstrom 100 kg/min beträgt, durch das geöffnete Absperrventil 16 in den Wirbeltrichter 1 eingebracht. Die Fördergasmenge des Stickstoffs beträgt dabei 0,7 $m^3$/min, das entspricht beim Anströmen an die Fläche des Siebes 10 einer Strömungsgeschwindigkeit von etwa 0,9 m/s. Das Sieb 10 weist eine Maschenweite von 1 mm auf. Der lichte Durchmesser der Zulauf-Leitung 3 beträgt 45 mm.

- 6 -

Die Strömungsgeschwindigkeit richtet sich nach den für eine Wirbelschichtbildung erforderlichen Werten. Sie ist abhängig von den spezifischen Eigenschaften des jeweils zu fördernden Stoffes, und wird zweckmäßig nach Angaben eingestellt, die L. Reh in seiner Dissertation an der TH Karlsruhe unter dem Titel "Das Wirbeln von körnigem Gut im schlanken Diffusor als Grenzzustand zwischen Wirbelschicht und pneumatischer Förderung" 1961 veröffentlicht hat. Nachdem die Feststoffteilchen mit der Wirbelschicht das Sieb 10 passiert haben, werden sie durch die Ablauf-Leitung 4, die ebenfalls einen lichten Durchmesser von 45 mm aufweist, zu einem Vorratsbehälter oder direkt zum Verbraucher weitergeleitet.

Die vom Sieb 10 zurückgehaltenen Feststoffteile (Siebrückstand) sammeln sich im Trichtermund des Wirbeltrichters 1 an. Das bewirkt mit der Zeit einen Druckabfall zwischen der Zulauf-Leitung 3 und der Ablauf-Leitung 4. Bei Überschreiten eines bestimmten Wertes der betreffenden Druckdifferenz wird durch eine entsprechende Meßeinrichtung gesteuert das Absperrventil 17 geöffnet, wodurch die angesammelten Feststoffteile über die Leitung 15 in den Behälter 19 abfließen. Gleichzeitig wird das Absperrventil 16 geschlossen. Nach Beendigung des Ablaufvorgangs schließt wieder das Ventil 17 und das Ventil 16 öffnet. Die für eine kurze Zeit unterbrochene Wirbelschicht wird wieder aufgebaut. Der im Behälter 19 angesammelte Siebdurchgang wird in die Zulauf-Leitung 3 zurückgeführt. Der durch das Sieb 18 des Behälters 19 zurückgehaltene Siebrückstand wird aus dem Förderstrom ausgeschieden.

- 7 -

Für den Fall, daß ein ununterbrochener gleichmäßiger Massenstrom von Feststoffteilen gewährleistet sein muß, werden mindestens 2 Gefäße parallel geschaltet und so betrieben, daß,
wenn ein Gefäß zum Entfernen des angesammelten
Siebrückstandes abgeschaltet wird, gleichzeitig
ein bereitgehaltenes Gefäß zugeschaltet wird.
Die zeitliche Zuordnung des Zuschaltens wird
dabei so abgestimmt, daß weder eine Unterbrechung
noch eine Vergrößerung des Massenstroms eintritt. Die Schaltvorgänge laufen dabei durch entsprechende Einrichtungen selbsttätig ab. Bei
Verwendung mehrerer parallel geschalteter Gefäße sind eine Reihe von verschiedenen Schaltungen
möglich, wodurch auch bei etwaigen Reparaturen
ein kontinuierlicher Massenstrom aufrechterhalten
werden kann.

Das neue Verfahren ist vorzugsweise geeignet für
die Kontrollsiebung von Massenströmen aller Arten
von Feinkohle, die mit einem geeigneten Inertgas
gefördert werden. Beim vorstehenden Ausführungsbeispiel haben die Feinkohlen eine Korngröße von
0 bis 300 μm. Das im Gefäß untergebrachte Sieb hat
einen Durchmesser von 1000 mm und der Wirbeltrichter weist einen Kegelwinkel von $55^{\circ}$ auf.
Eine Anpassung der Vorrichtung und des Verfahrens
an verschiedene Verhältnisse, wie z.B. an andere
Stoffe, deren Beschaffenheit und an unterschiedliche
Durchsatzleistungen ist mit dem Verfahren wie auch
mit der Vorrichtung durch einfache Anpassungen leicht
möglich.

- 8 -

Im Falle, daß der Schwingungsgenerator 13 außerhalb des Gefäßes angeordnet ist, müssen die zwischen ihm und dem Sieb 10 angeordneten Streben durch mit entsprechenden Kompensatoren abgedichtete Öffnungen des Deckelteils hindurchgeführt werden. Der damit verbundene Vorteil liegt aber darin, daß der Schwingungsgenerator zu Wartungszwecken zugänglich ist, ohne das Gefäß öffnen zu müssen.

Anstelle der an die Leitungsverzweigung 14 angeschlossenen Absperrventile 16 und 17 kann auch eine in der Leitungsverzweigung direkt angeordnete Umschaltklappe eingesetzt werden, die unter Umständen ein schnelleres Umschalten ermöglicht. Dabei besteht eine besonders vorteilhafte Ausgestaltung darin, daß durch entsprechende Gestaltung der Durchmesser der Ablauf-Leitung 15 gegenüber dem der Zulauf-Leitung 3 erheblich vergrößert wird, um das Abfließen des Siebrückstandes zu erleichtern und beschleunigen. Zu dem Zweck ist vorteilhaft eine oberhalb der Mündung des Wirbeltrichters 1 angelenkte, in die entsprechend vergrößerte Ablauf-Leitung hineinschwenkbare Klappe vorgesehen, deren unteres Ende in der Schließstellung im Mündungsbereich liegt, und eine der Wand des Wirbeltrichters 1 angepaßte Form aufweist.

- 9 -

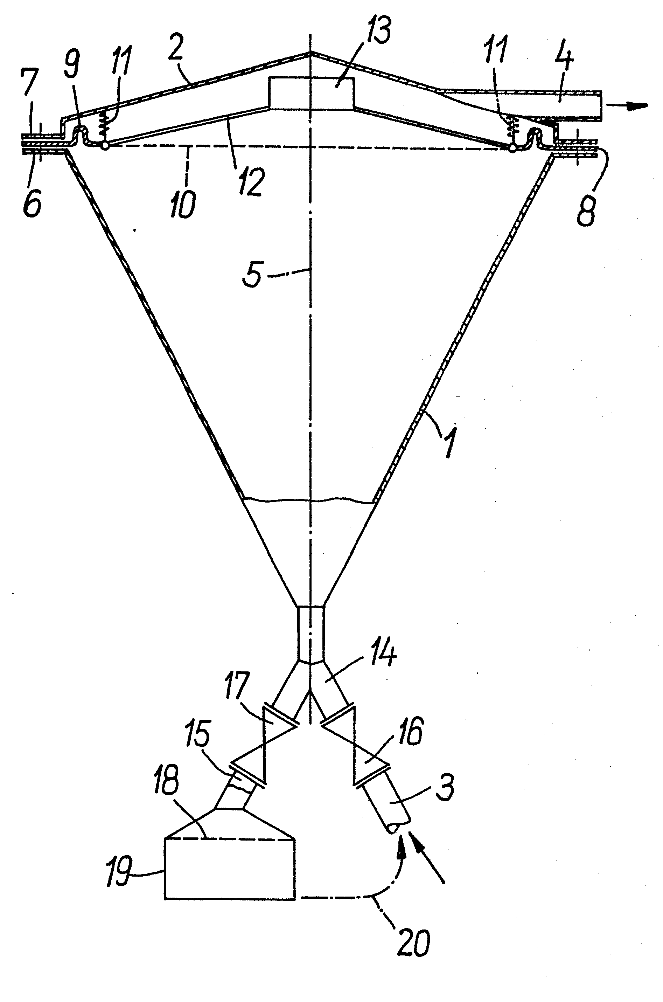

Patentansprüche

1. Verfahren zum Absieben von in einer Leitung pneumatisch geförderten Feststoffteilen, insbesondere solcher aus Feinkohle, mittels eines in die Leitung eingeschalteten Siebes, das zumindest annähernd waagerecht in einem sich im wesentlichen unter dem Sieb erstreckenden Gefäß angeordnet ist und von unten beaufschlagt wird, d a d u r c h g e k e n n z e i c h n e t , daß in dem Gefäß eine das Sieb von unten an- und durchströmende Wirbelschicht aus Fördergas und Feststoff gebildet wird.

2. Verfahren nach Anspruch 1, dadurch gekennzeichnet, daß bei Anhäufung nicht durchsiebbarer Feststoffteile diese aus dem Gefäß abgeführt werden und falls erforderlich eine neue Wirbelschicht aufgebaut wird.

3. Verfahren nach Anspruch 2, dadurch gekennzeichnet, daß das Abführen durch Schwerkraft erfolgt.

4. Verfahren nach Anspruch 2 oder 3, dadurch gekennzeichnet, daß das Abführen durch den Druck des Fördergases in der Wirbelschicht gesteuert wird.

5. Verfahren nach einem der Ansprüche 2 bis 4, dadurch gekennzeichnet, daß die abgeführten Feststoffteile durchgesiebt werden.

6. Verfahren nach Anspruch 5, dadurch gekennzeichnet, daß der durchgesiebte Anteil der Feststoffteile in die Wirbelschicht zurückgeführt wird.

7. Verfahren nach einem der vorhergehenden Ansprüche, dadurch gekennzeichnet, daß die Strömungsgeschwindigkeit des Fördergases in Abhängigkeit von den spezifischen physikalischen Werten des Feststoffs so eingestellt wird, daß die nicht durchsiebbaren Feststoffteile höchstens bis dicht unter das Sieb gefördert werden.

8. Verfahren nach einem der vorhergehenden Ansprüche, dadurch gekennzeichnet, daß das Durchsieben unter Rüttelbewegungen des Siebes erfolgt.

9. Verfahren nach einem der vorhergehenden Ansprüche, dadurch gekennzeichnet, daß wenigstens zwei parallele Wirbelschichten in diesen zugeordneten Gefäßen gleichzeitig gebildet werden können, von denen eine bzw. mehrere jeweils nur zur Ablösung einer anderen gebildet wird.

10. Vorrichtung zur Durchführung des Verfahrens nach einem der vorhergehenden Ansprüche, dadurch gekennzeichnet, daß das als geschlossener Wirbeltrichter (1) ausgebildete Gefäß in seinem oberen Bereich ein etwa seinen Querschnitt überspannendes Sieb (10), darüber mindestens eine Ablaufleitung (4) und am Trichtermund eine Leitungsverzweigung (14) aufweist, deren als Zulauf (3) und Ablauf (15) ausgeführte Abzweigleitungen absperrbar sind.

11. Vorrichtung nach Anspruch 10, dadurch gekennzeichnet, daß das Sieb (10) an seinen Rändern federnd befestigt und dort mit Schwingungen einleitenden Mitteln versehen ist.

12. Vorrichtung nach Anspruch 11, dadurch gekennzeichnet, daß die Mittel mit mindestens einem Schwingungsgenerator verbundene Streben (12) sind.

13. Vorrichtung nach Anspruch 12, dadurch gekennzeichnet, daß die Streben (12) durch entsprechende mit Kompensatoren abgedichtete Öffnungen in der Gehäusewand hindurch nach außen geführt sind.

14. Vorrichtung nach Anspruch 12, dadurch gekennzeichnet, daß der Schwingungsgenerator (13) zentral über dem Sieb (10) innerhalb des Gefäßes angeordnet und mit den bezogen auf die Gefäßachse etwa radial verlaufenden Streben (12) verbunden ist.

15. Vorrichtung nach einem der Ansprüche 10 bis 14, dadurch gekennzeichnet, daß das Sieb (10) an seinen Rändern mit einem ringförmigen Kompensator (8) verbunden ist, dessen äußerer Flansch zwischen dem als Flansch (6) ausgebildeten oberen Ende des trichterförmigen Gefäßteils (1) und dem ebenfalls als Flansch (7) ausgebildeten unteren Ende eines nach oben ausgewölbten Deckelteils (2) des Gefäßes befestigt ist.

16. Vorrichtung nach Anspruch 10, dadurch gekennzeichnet, daß an die Ablauf-Leitung ein mit einem Sieb (18) versehener Behälter (19) angeschlossen ist.

17. Vorrichtung nach Anspruch 16, dadurch gekennzeichnet, daß der den Siebdurchgang aufnehmende Teil des Behälters (19) mit der Zulauf-Leitung (3) in Verbindung steht.

18. Vorrichtung nach einem der Ansprüche 10 bis 17, dadurch gekennzeichnet, daß die Ablauf-Leitung (15) einen größeren Querschnitt als die Zulauf-Leitung (3) aufweist und daß der Mündungsbereich des Wirbeltrichters (1) auf den Querschnitt der Ablauf-Leitung erweiterbar ist.

19. Vorrichtung nach Anspruch 18, dadurch gekennzeichnet, daß die Ablauf-Leitung durch eine oberhalb der Mündung des Wirbeltrichters (1) angelenkte und etwa bis zur Mündung reichende Klappe oder dergleichen verschließbar ist.